# EUROPÄISCHE PATENTSCHRIFT

(11) **EP 1 425 635 B1**
(45) Veröffentlichungstag und Bekanntmachung des Hinweises auf die Patenterteilung: **27.12.2006**
(21) Anmeldenummer: 02797986.3
(22) Anmeldetag: 12.09.2002
(51) Int. Cl.: G05B 1/00

(54) **ÜBERWACHUNGSSYSTEM, SOWIE VERFAHREN ZUR PROZESSBEGLEITENDEN ÜBERWACHUNG VON KOLLISIONS- BZW. ÜBERLASTSITUATIONEN AN WERKZEUGMASCHINEN**
MONITORING SYSTEM, METHOD FOR THE PROCESS-PARALLEL MONITORING OF COLLISION OR OVERLOAD SITUATIONS IN MACHINE TOOLS
SYSTEME DE SURVEILLANCE, AINSI QUE PROCEDE DE SURVEILLANCE, PARALLELE AUX PROCESSUS, DE SITUATIONS DE COLLISION OU DE SURCHARGE SUR DES MACHINES-OUTILS

(30) Priorität: 12.09.2001 DE 10144998
(43) Veröffentlichungstag der Anmeldung: 09.06.2004
(73) Patentinhaber: Kluft, Werner, D-52078 Aachen (DE)
(72) Erfinder: Kluft, Werner, D-52078 Aachen (DE)
(74) Vertreter: Dallmeyer, Georg
(86) Internationale Anmeldenummer: PCT/EP2002/010243
(87) Internationale Veröffentlichungsnummer: WO 2003/023528

(56) Entgegenhaltungen:
- WO-A-00/36543
- DE-A- 4 336 863
- US-A- 5 142 210
- US-A- 5 819 202
- US-A- 6 021 360

## Beschreibung

Die Erfindung bezieht sich auf ein Überwachungssystem, sowie auf ein Verfahren zur prozessbegleitenden Überwachung von Kollisions- bzw. Überlastsituationen mit Ereignisdatenrekordern an Werkzeugmaschinen nach dem Oberbegriff des Anspruchs 1 bzw. 8.

Überwachungssysteme zur prozessbegleitenden Überwachung von Kollisions- bzw. Überlastsituationen an Werkzeugmaschinen sind Stand der Technik und haben das Ziel, Maschinenkollisionen in-Prozess zu erkennen und die Maschinenantriebe, meist zunächst nur die Vorschubantriebe schnellstmöglich still zu setzen, um Folgeschäden zu vermeiden.

Solche In-Prozess-Überwachungssysteme verfügen bereits über eine elektrische Schnittstelle zwischen dem Überwachungssystem und der Maschinensteuerung, um in von der Maschinensteuerung vorgegebenen Überwachungsabschnitten die Signalverläufe der Sensoren in-Prozess zu überwachen und im Falle der Erkennung von Kollisions- bzw. Überlastsituationen oder auch z. B. von Werkzeugbruch die Maschine über dieselbe Schnittstelle still zu setzen. Die Schnittstellen zwischen der Werkzeugmaschinensteuerung und dem Überwachungssystem waren bisher im wesentlichen in Form von parallelen Ein- und Ausgangssignalen zur SPS-Steuerung vorhanden. Eine solche parallele Schnittstelle zwischen der SPS und einem Werkzeug- und Prozessüberwachungs- bzw. Kollisions- und Überlast-Erkennungssystem besteht zum Beispiel nach dem BAPSI-Standard (Brankamp-Artis-Prometec-Standard-Interface), der es auch bereits erlaubt, Datenwörter als Werkzeugcode bzw. Schnittcode aus dem NC-Programm an das Überwachungssystem zu übertragen.

Eine bekannte Steuerung Sinumerik 840D der Firma Siemens weist einen sogenannten Fahrtenschreiber auf, der aber nur Bedienungsabläufe protokollieren kann. Dieser wird nicht durch ein gemessenes bzw, erfasstes Kollisions- oder Überlastereignis gestartet, sondern dokumentiert einfach nur alle Bedienungsabläufe, mit der nachteiligen Folge, dass anderweitige Ursachen für kollisionsbedingte Maschinenschäden nicht erfasst werden.

Das US-Patent 5,819,202 beschreibt ein Gerät zum Feststellen eines unnormalen Zustandes einer Steuerung. Dabei soll das Gerät zuverlässig unnormale Zustände feststellen können, ohne von Störungen oder Bedienungsfehlern beeinflusst zu werden.

Das Steuersystem beurteilt einen unnormalen Zustand auf der Basis der Daten für einen normalen Betrieb (z.B. Position, Geschwindigkeit, Strom oder andere Werte). Dies wird realisiert durch statistische Methoden, indem normale oder unnormale Werteregionen bestimmt werden.

Der gespeicherte Arbeitsbereich für den unnormalen Betrieb kann mit Hilfe statistischer Methoden aktualisiert werden.

Daher ist das bekannte Überwachungssystem ein herkömmliches System, das in Echtzeit unnormale Betriebszustände detektiert und gespeicherte Daten über einen unnormalen Arbeitsbereich aktualisiert.

Die WO 00/36543 beschreibt eine Schleifmaschine, bei der in einer Schleifscheibe ein eingebetteter Sensor angeordnet ist.

Die Sensormesssignale werden an einen Computer übertragen, so dass in Echtzeit die Messsignale des Sensors auf einem Monitor beobachtet werden können, ohne den Schleifprozess zu unterbrechen.

Der Erfindung liegt die Aufgabe zugrunde, ein Überwachungssystem, sowie eine Verfahren zur prozessbegleitenden Überwachung von Kollisions- bzw, Überlastsituationen an Werkzeugmaschinen zu schaffen, mit dem im Falle einer Kollisions-und Überlastsituation nicht nur ein Eingriff in die Maschinensteuerung erfolgt, sondern darüber hinaus eine nachträgliche Beurteilung der Ursachen einer solchen Kollisions- und Überlastsituation ermöglicht wird.

Zur Lösung dieser Aufgabe dienen die Merkmale des Anspruchs 1 bzw. 8.

Erfindungsgemäß wird die Aufgabe durch ein in-Prozess Überwachungssystems zur prozessbegleitenden Überwachung bzw. Erkennung von Kollisions- bzw. Überlastsituationen mit einem großen dauerhaften Speicher, der einen Ereignisdatenrekorder bildet, z.B. einer Flash-Disk, und vorzugsweise einer Feldbusschnittstelle zwischen der Maschinensteuerung und dem Überwachungssystem, in Verbindung mit einem Datentransfer zwischen der elektrische Schnittstelle der Maschinensteuerung und dem Überwachungssystem sowie in Verbindung mit einem Sensorsignal, welches kollisionsrelevante Messsignale liefert, gelöst.

Die erfindungsgemäße Lösung sieht also die Dokumentation von Kollisions- bzw, Überlastsituationen an Werkzeugmaschinen durch einen Ereignisdatenrekorder vor, um im Falle solcher Kollisions- und Überlastsituationen deren Ursachen sicher ermitteln zu können.

Die Erfindung kann die erst in jüngster Zeit von den Steuerungsherstellern angebotenen Feldbusschnittstellen (neben oder als Ersatz für die parallelen Schnittstellen) nutzen, die es ermöglichen, einen umfassenderen Informationsaustausch zwischen der Maschinensteuerung, bestehend aus der speicherprogrammierbaren Steuerung (SPS) bzw. der NC-Steuerung, auszutauschen.

Ein derartiges System zur Dokumentation von Kollisions- bzw. Überlastsituationen an Werkzeugmaschinen durch einen Ereignisdatenrekorder, um im Falle solcher. Kollisions- und Überlastsituationen deren Ursachen sicher ermitteln zu können, ist bisher nicht bekannt geworden.

Nach dem Stand der Technik war es nicht möglich, im Falle einer Kollisions- bzw. einer Überlastsituation im nachhinein die Ursachen festzustellen, die die Situation herbeigeführt haben. Da in diesen Fällen die wirtschaftlichen Schäden durch Maschinenstillstand oder Maschinenbeschädigung erheblich sein können, ist die Feststellung, ob technisches oder menschliches Versagen ursächlich war, von erheblicher wirtschaftlicher Bedeutung.

Desweiteren ermöglicht die Feststellung der Ursache, Fehler in den Maschinenkomponenten, im Betriebsablauf oder Fehler von Bedienungspersonen festzustellen und in der Folge zu vermeiden.

Das Überwachungssystem zur prozessbegleitenden Überwachung bzw. Erkennung von Kollisions- bzw. Überlastsituationen zwischen Maschinenkomponenten untereinander oder von Werkzeugen mit Maschinenkomponenten oder Werkstücken bzw. von Werkstücken mit Maschinenkomponenten oder Werkzeugen in Werkzeugmaschinen besteht aus mindestens
- einem oder mehreren Sensoren zur Erfassung von Messsignalen oder Messsignalkurven wie sie bei Kollisionen, Überlastungen bzw. Beschädigungen von Werkzeugmaschinen entstehen können, die mindestens einer Kraftrichtung, einer Kraftresultierenden, einem Druck, einem Drehmoment, einer Motorleistung, einem Motorstrom, auch wenn dieser den Werten des Motorstromsensors der Steuerung entnommen wird, einer Schwingung, einer Beschleunigung, einer Abstandsveränderung oder einem Körperschallgeräusch gleichzusetzen sind,
- einer Überwachungseinrichtung bestehend aus Überwachungshardware mit Software, in der ein Vergleich der Messsignale oder Messsignalkurven von mindestens einem Sensor mit gespeicherten Überwachungsschwellen durch Überwachungs- und Auswertestrategien bekannter und beliebiger Art wie statische Schwellen, dynamische Schwellen, Schwellen von Signalmusterkurven etc. mit dem Ziel durchgeführt wird, bei Messsignalen oder Messsignalkurven, die Überwachungsschwellen verletzen, eine entsprechende Meldung vom Überwachungssystem an die Maschinensteuerung zu geben, um die Werkzeugmaschine oder zumindest ihre Vorschubantriebe sofort still zu setzen, und
- einer bidirektionalen Schnittstelle zwischen der Überwachungshardware und der Maschinensteuerung (bestehend aus der SPS- und der NC-Steuerung), die einen Datenaustausch zwischen der Maschine und dem Überwachungssystem vornimmt und die z. B. dazu geeignet ist, das Überwachungssystem über ein Signal zu aktivieren, sobald ein Vorschubschlitten verfährt, bzw. sogar spindel- , werkzeug- oder gar schnittspezifische Überwachungsabschnitte in Form von Datenworten als unterschiedliche Nummern oder Befehle aus dem NC- bzw. SPS-Programm an das Überwachungssystem zwecks Aufteilung der Überwachung in verschiedene Überwachungsabschnitte zu übertragen, und auch dazu geeignet ist, Maschinenstop- oder zumindest Maschinenreaktionsbefehle im Moment der Erkennung von Kollisionen oder Überlastsituationen an die Maschinensteuerung zu senden.

Optional kann eine Bedienungseinrichtung bestehend aus Bedienungshardware mit Software zur Bedienung und/oder Parametrierung des Überwachungssystems und/oder zur Visualisierung der Messsignale vorgesehen sein.

Dieses Überwachungssystem ist neben der Erkennung von Kollisions- bzw. Überlastsituationen in einer Werkzeugmaschine und der Übergabe von Maschinenstop-oder Maschinenreaktionsbefehlen an die Maschinensteuerung auch dazu in der Lage, die Messsignaldatensätze (Messsignale oder Messsignalkurven) der Sensoren, wie sie vor, während und nach einer Kollision bzw. Überlastsituation durch die Sensoren gemessen werden und die Daten und Zustände der Maschinensteuerung, die im Hinblick auf die Ermittlung der Ursachen einer Kollisions- bzw. Überlastsituation von Interesse sind, dauerhaft zu speichern.

Ein Mitschreiben der Messsignaldatensätze der Sensoren im Arbeitsspeicher des Überwachungssystems erfolgt ständig. Erst mit der Kollisions- bzw. Überlasterkennung wird eine Übertragung der Messdaten in den dauerhaften Speicher des Überwachungssystems vorgenommen.

Das Überwachungssystem schreibt mindestens einen Messsignaldatensatz, (Messsignal oder eine Messsignalkurve) von jedem der Sensoren in den Arbeitsspeicher ständig mit.

Das Überwachungssystem schreibt vorzugsweise zwei Messsignaldatensätze von jedem der Sensoren in verschiedene Arbeitsspeicherplätze mit jeweils verschiedener zeitlicher Auflösung, genannt "lang" und "kurz" ständig mit. Das heißt, dass ein Messdatensatz in einem kleinen Zeitfenster mit hoher Auflösung und ein Messdatensatz in einem größeren Zeitfenster mit geringerer Auflösung gespeichert wird.

Die Übertragung der Messsignaldatensätze in die dauerhaften Speicherplätze des Überwachungssystems erfolgt unmittelbar bei Erkennung der Kollisions- bzw. Überlastsituation und damit zusammen bei der Meldung dieser Situation an die Maschinensteuerung.

Die im dauerhaften Speicherplatz abzulegenden Messdatensätze (Messsignale oder Messsignalkurven) mit der "langen" zeitlichen Auflösung beginnen vorzugsweise ca. 2 Sekunden vor der Kollisions- bzw. Überlastsituation und enden ca. 3 Sekunden danach.

Die im dauerhaften Speicherplatz abzulegenden Messdatensätze mit der "kurzen" zeitlichen Auflösung beginnen vorzugsweise ca. 100 Millisekunden vor der Kollisions- bzw. Überlastsituation und enden ca. 150 Millisekunden danach.

Unmittelbar mit der Mitteilung einer Kollisions- bzw. Überlastsituation des Überwachungssystems an die Maschinensteuerung beginnt diese durch eine entsprechende Software damit, Daten und Zustände der Maschinensteuerung, die im Hinblick auf die Ermittlung der Ursachen einer Kollisions- bzw. Überlastsituation von Interesse sind, zu erfassen und über die Schnittstelle zwischen der Maschinensteuerung und dem Überwachungssystem an das Überwachungssystem zu übertragen, um dort durch die Software des Überwachungssystems in dessen dauerhaften Speicher, der als Ereignisdatenrekorder dient, zu schreiben.

Die Schnittstelle zwischen der Maschinensteuerung und dem Überwachungssystem ist bevorzugt eine Feldbusschnittstelle wie z. B. ein Profibus oder ein Interbus (als bidirektionale Schnittstelle).

Mindestens einer der folgenden Datensätze und/oder Zustandsparameter der Maschinensteuerung werden im Hinblick auf die Ermittlung der Ursachen einer Kollisions- bzw. Überlastsituation in den dauerhaften Speicher des Überwachungssystems geschrieben:
- Programm-Name bzw. -Nummer, der in der NC-Steuerung aktiv war
- Satznummer, bei der das NC-Programm durch das Überwachungssystem angehalten wurde
- Aktuelle Werkzeugnummer in Form der T- oder D-Nummer
- Betriebsart der Maschine (Einrichten, Jog, Automatik)
- Programmierte Werkzeugkorrekturwerte aus dem Werkzeugkorrekturspeicher
- Programmierte Nullpunktverschiebung
- Einstellung des Overrideschalters für Vorschub
- Einstellung des Overrideschalters für Spindeldrehzahl
- Drehzahl der Spindeln
- Programmierte Geschwindigkeit der Vorschubschlitten
- Aktuelle Geschwindigkeit der Vorschubschlitten
- Programmierter Vorschub der Vorschubschlitten
- Position oder Lage-Istwerte der Vorschubschlitten
- Datum und Uhrzeit

Unmittelbar mit der Mitteilung einer Kollisions- bzw. Überlastsituation des Überwachungssystems an die Maschinensteuerung können auch alle Zustände der Signale der bidirektionalen Schnittstelle zwischen dem Überwachungssystem und der Maschinensteuerung, wie z. B. diejenigen gemäß dem BAPSI-Standard, von dem Überwachungssystem in dessen dauerhaften Speicher geschrieben werden .

Unmittelbar mit der Mitteilung einer Kollisions- bzw. Überlastsituation des Überwachungssystems an die Maschinensteuerung können auch alle überwachungsrelevanten Daten der Überwachungseinrichtung, wie z. B. die Lage der Überwachungsschwellen, die Messbereiche bzw. Verstärkungsgrade der Sensoren, die Kennwerte zur Filterung der Messsignale, der Überwachungsmodus wie Teach-In, Einrichten, etc. in dessen dauerhaften Speicher geschrieben werden.

Alle im dauerhaften Speicher des Überwachungssystems zu einer erkannten Kollisions- bzw. Überlastsituation abzuspeichernden Messsignalkurven, Signale, Daten und Zustände gehören zu einem unverwechselbaren und gekennzeichneten Datensatz.

Alle Messsignalkurven, Signale, Daten und Zustände eines Datensatzes zu einer Kollisions- bzw. Überlastsituation können mit der Bedienungseinrichtung (Bedienungshardware und Software) zur Bedienung und/oder Parametrierung des Überwachungssystems und/oder zur Visualisierung der Messsignale angezeigt und ggf. ausgedruckt werden.

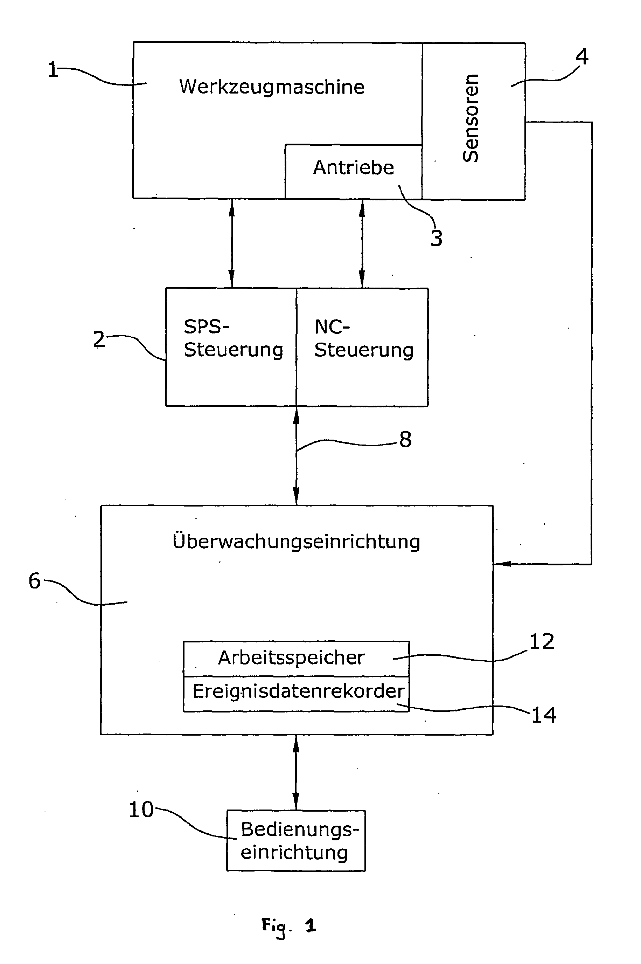

Im folgenden wird unter Bezugnahme auf die einzige Zeichnung ein Ausführungsbeispiel der Erfindung näher erläutert:

Das in der Zeichnung gezeigte Überwachungssystem zur prozessbegleitenden Überwachung bzw. Erkennung von Kollisions- bzw. Überlastsituation in einer Werkzeugmaschine 1 mit einer Maschinensteuerung 2 weist mindestens einen oder mehrere Sensoren 4 zur Erfassung von Messsignaldatensätzen auf. Die Messsignaldatensätze werden einer Überwachungseinrichtung 6 zugeführt, in der ein Vergleich der Messsignaldatensätze von mindestens einem Sensor 4 mit gespeicherten Überwachungsschwellen zur Erkennung von Kollisions- bzw. Überlastsituationen durchgeführt wird. Die Überwachungseinrichtung 6 gibt im Falle, dass die Messsignaldatensätze die Überwachungsschwellen verletzen, einen Befehlssatz an die Maschinensteuerung 2, um die Werkzeugmaschine 1 oder zumindest ihre Vorschubantriebe 3 sofort still zu setzen.

Die Maschinensteuerung besteht aus einer speicherprogrammierbaren Steuerung SPS für die Werkzeugmaschine 1 und einer NC-Steuerung für die Antriebe 3. Zwischen der speicherprogrammierbaren Steuerung SPS und der NC-Steuerung können gemäß dem Stand der Technik Daten und Zustände bidirektional ausgetauscht werden.

Eine bidirektionale Schnittstelle 8 ist zwischen der Überwachungseinrichtung 6 und der Maschinensteuerung 2 vorgesehen, die einen Datenaustausch zwischen der Werkzeugmaschine 1 und der Überwachungseinrichtung 6 vornimmt.

Die Überwachungseinrichtung 6 weist einen Arbeitsspeicher 12 auf, in den die Überwachungseinrichtung 6 mindestens einen Messsignaldatensatz von jedem der Sensoren 4 ständig einschreibt, wobei auch vorgesehen sein kann, dass mehrere Messsignaldatensätze von jedem der Sensoren 4 in verschiedene Arbeitsspeicherplätze des Arbeitsspeicher 12 mit voneinander unterschiedlicher zeitlicher Auflösung fortlaufend eingeschrieben werden.

Die Überwachungseinrichtung 6 kann neben der Erkennung von Kollisions- oder Überlastsituationen in einer Werkzeugmaschine 1 und der Übergabe von Maschinenstop- oder Maschinenreaktionsbefehlen an die Maschinensteuerung 2 auch die Messsignaldatensätze der Sensoren 4, die sie vor, während und nach einer Kollision- bzw. Überlastsituation durch die Sensoren gemessen worden sind, sowie die Daten und Zustände der Maschinensteuerung 2 in einen Ereignisdatenrekorder 14 abspeichern, der aus einem dauerhaften Speicher, z.B. einer Flash-Disk, besteht.

Die Überwachungseinrichtung 6 kann desweiteren mit einer Bedienungseinrichtung 10 verbunden sein. Alle Messsignalkurven, Signale, Daten und Zustände eines Datensatzes zu einer Kollisions- oder Überlastsituation können mit der Bedienungseinrichtung 10 zur Bedienung und/oder Parametrierung des Überwachungssystems und/oder zur Visualisierung der Messsignaldatensätze angezeigt und ggf. durch Ausdruck dokumentiert werden.

## Patentansprüche

1. Überwachungssystem zur prozessbegleitenden Überwachung und Erkennung von Kollisions- oder Überlastsituationen in Werkzeugmaschinen (1), mit
- einer Maschinensteuerung (2),
- einem oder mehreren Sensoren (4) zum Erfassen von Messsignalen und Bilden von Messsignaldatensätzen,
- einem Arbeitsspeicher (12) zum Speichern der Messsignaldatensätze,
- einer Überwachungseinrichtung (6), in der ein Vergleich der Messsignale von mindestens einem Sensor mit gespeicherten Übervvachungsschwellen durchgeführt wird,
- wobei die Überwachungseinrichtung (6) bei der Erkennung von Kollisions-oder Überlastsituationen in einer Werkzeugmaschine (1) Maschinenstopp-oder Maschinenreaktionsbefehle an die Maschinensteuerung (2) überträgt,
**dadurch gekennzeichnet,**
**dass** die Überwachungseinrichtung (6) derart ausgebildet ist, daβ sie bei Erkennung von Kollision oder Überlastsituation die Messsignaldatensätze der Sensoren (4), wie sie vor, während und nach einer Kollision bzw. Überlastsituation durch die Sensoren (4) gemessen worden sind, aus dem Arbeitsspeicher (12) ausliest und die Daten und Zustände der Maschinensteuerung (2) von der Maschinensteuerung (2) abruft und die ausgelesenen Messsignaldatensätze sowie die abgerufenen Daten und Zustände der Maschinensteuerung (2) dauerhaft in einen Ereignisdatenrekorder (14) speichert.

2. Überwachungssystem nach Anspruch 1, **dadurch gekennzeichnet, dass** das System
- einen oder mehrere Sensoren (4) zum Erfassen der Messsignale und Speichern von Messsignaldatensätzen (Messsignale oder Messsignalkurven) wie sie bei Kollisionen, Überlastungen bzw. Beschädigungen von Werkzeugmaschinen (1) entstehen, die mindestens einer Kraftrichtung, einer Kraftresultierenden, einem Druck, einem Drehmoment, einer Motorleistung, einem Motorstrom, auch wenn dieser den Werten des Motorstromsensors der Steuerung entnommen wird, einer Schwingung, einer Beschleunigung, einer Abstandsveränderung oder einem Körperschallgeräusch gleichzusetzen sind,
- eine Überwachungseinrichtung (6), in der ein Vergleich der Messsignale von mindestens einem Sensor (4) mit gespeicherten Überwachungsschwellen, wie statische Schwellen, dynamische Schwellen, Schwellen von Signalmusterkurven mit dem Ziel durchgeführt wird, bei Messsignalen, die Überwachungsschwellen verletzen, ein entsprechendes Meldesignal von der Überwachungseinrichtung (6) an die Maschinensteuerung (2) zu geben, um die Werkzeugmaschine oder zumindest ihre Vorschubantriebe (3) sofort stillzusetzen, und
- eine bidirektionale Schnittstelle (8) zwischen der Überwachungseinrichtung (6) und der Maschinensteuerung (2), die einen Datenaustausch zwischen der Maschine (1) und der Überwachungseinrichtung (6) vornimmt und die dazu geeignet ist, die Überwachungseinrichtung (6) über ein Signal zu aktivieren, sobald ein Vorschubschlitten verfährt, oder spindel-, werkzeug- oder schnittspezifische Überwachungsabschnitte in Form von Datenworten aus dem NC- bzw. SPS-Programm an die Überwachungseinrichtung (6) zwecks Aufteilung der Überwachung in verschiedene Überwachungsabschnitte zu übertragen, und auch dazu geeignet ist, Maschinenstopp- oder zumindest Maschinenreaktionsbefehle im Moment der Erkennung von Kollisionen oder Überlastsituationen an die Maschinensteuerung (2) zu senden,
aufweist.

3. Überwachungssystem nach Anspruch 1 oder 2, **dadurch gekennzeichnet, dass** unmittelbar mit der Mitteilung einer Kollisions- bzw. Überlastsituation an die Maschinensteuerung (2) diese Daten und Zustände der Maschinensteuerung (2) erfasst und über die Schnittstelle (8) zwischen der Maschinensteuerung (2) und der Überwachungseinrichtung (6) an die Überwachungseinrichtung (6) überträgt und in deren Ereignisdatenrekorder (14) schreibt.

4. Überwachungssystem nach Anspruch 1 bis 3, **dadurch gekennzeichnet, dass** die Schnittstelle (8) zwischen der Maschinensteuerung (2) und der Überwachungseinrichtung (6) bevorzugt eine Feldbusschnittstelle wie z. B. ein Profibus oder ein Interbus ist.

5. Überwachungssystem nach einem der Ansprüche 1 bis 4, **dadurch gekennzeichnet, dass** die Überwachungseinrichtung (6) mit einer Bedienungseinrichtung (10) zur Bedienung und/oder Parametrierung des Überwachungssystems und/oder zur Visualisierung der Messsignale verbunden ist.

6. Überwachungssystem nach einem der Ansprüche 1 bis 5, **dadurch gekennzeichnet, dass** die dauerhaft in den Ereignisdatenrekorder (14) zu speichernden Messsignaldatensätze mit der geringeren Auflösung vorzugsweise ca. 2 Sekunden vor der Kollisions- bzw. Überlastsituation beginnen und ca. 3 Sekunden danach enden.

7. Überwachungssystem nach einem der Ansprüche 1 bis 6, **dadurch gekennzeichnet, dass** die dauerhaft in den Ereignisdatenrekorder (14) zu speichernden Messsignaldatensätze mit der höheren Auflösung vorzugsweise ca. 100 Milllsekunden vor der Kollisions- bzw, Überlastsituation beginnen und ca. 150 Millisekunden danach enden.

8. Verfahren zur prozessbegleitenden Überwachung bzw. Erkennung von Kollisions- oder Überlastsituation in Werkzeugmaschinen (1) durch Erfassen von Messsignalen und Speichern von Messsignaldatensätzen, die das Erkennen von Kollisionen oder Überlastsituationen ermöglichen,
- durch Vergleichen der Messsignale mit gespeicherten Überwachungsschwellen, wobei bei Erkennen einer Kollisions- oder Überlastsituation Maschinenstopp- oder Maschinenreaktionsbefehle an eine Maschinensteuerung (2) gesendet werden,
**dadurch gekennzeichnet, dass**
die Messsignale der Sensoren (4) als Messsignaldatensätze fortlaufend gespeichert werden, und
dass erst bei Kollisions- oder Überlasterkennung die Messsignaldatensätze der Sensoren (4), wie sie vor, während und nach einer Kollision bzw. Überlastsituation durch die Sensoren (4) gemessen worden sind, ausgelesen werden und gemeinsam mit bei Kollision- oder Überlasterkennung abgerufenen Daten und Zuständen der Maschinensteuerung (2) dauerhaft gespeichert werden.

9. Verfahren nach Anspruch 8, **dadurch gekennzeichnet, dass** vorzugsweise zwei Messsignaldatensätze von jedem der Sensoren (4) in verschiedene Arbeitsspeicherplätze des Arbeitsspeichers (12) mit voneinander unterschiedlicher zeitlicher Auflösung ständig mitgeschrieben werden.

10. Verfahren nach Anspruch 8 oder 9, **dadurch gekennzeichnet, dass** die Übertragung der Messsignaldatensätze in einen Ereignisdatenrekorder (14) unmittelbar mit der Erkennung der Kollisions- bzw. Überlastsituation und damit zusammen mit der Meldung dieser Situation an die Maschinensteuerung (2) erfolgt.

11. Verfahren nach einem der Ansprüche 8 bis 10, **dadurch gekennzeichnet, dass** mindestens einer der folgenden Daten und Zustände der Maschinensteuerung (2) bei einer Kollisions- bzw. Überlastsituation in den Ereignisdatenrekorder (14) der Überwachungseinrichtung (6) geschrieben werden:
- Programm-Name bzw. -Nummer, der in der NC-Steuerung aktiv war
- Satznummer, bei der das NC-Programm durch das Überwachungssystem angehalten wurde,
- Aktuelle Werkzeugnummer,
- Betriebsart der Maschine,
- Programmierte Werkzeugkorrekturwerte aus dem Werkzeugkorrekturspeicher,
- Programmierte Nullpunktverschiebung,
- Einstellung des Overrideschalters für Vorschub,
- Einstellung des Overrideschalters für Spindeldrehzahl,
- Drehzahl der Spindeln,
- Programmierte Geschwindigkeit der Vorschubschlitten,
- Aktuelle Geschwindigkeit der Vorschubschlitten,
- Programmierter Vorschub der Vorschubschlitten,
- Position oder Lageistwerte der Vorschubschlitten,
- Datum und Uhrzeit.

12. Verfahren nach einem der Ansprüche 8 bis 11, **dadurch gekennzeichnet, dass** unmittelbar mit der Mitteilung einer Kollisions- bzw. Überlastsituation der Überwachungseinrichtung (6) an die Maschinensteuerung (2) auch alle Zustände der Signale der bidirektionalen Schnittstelle (8) zwischen der Überwachungseinrichtung und der Maschinensteuerung (2) von der Überwachungseinrichtung (6) in den Ereignisdatenrekorder (14) geschrieben werden.

13. Verfahren nach einem der Ansprüche 8 bis 12, **dadurch gekennzeichnet, dass** unmittelbar mit der Mitteilung einer Kollisions- bzw. Überlastsituation der Überwachungseinrichtung (6) an die Maschinensteuerung (2) auch alle überwachungsrelevanten Daten des Überwachungseinrichtung (6), wie z. B. die Lage der Überwachungsschwellen, die Messbereiche bzw. Verstärkungsgrade der Sensoren (4), die Kennwerte zur Filterung der Messsignale, der Überwachungsmodus wie Teach-In oder Einrichten in den Ereignisdatenrekorder (14) geschrieben werden.

14. Verfahren nach einem der Ansprüche 8 bis 13, **dadurch gekennzeichnet, dass** alle im Ereignisdatenrekorder (14) der Überwachungseinrichtung (6) zu einer erkannten Kollisions- bzw. Überlastsituation abzuspeichernden Messsignalkurven, Signale, Daten und Zustände einem unverwechselbaren und gekennzeichneten Datensatz zugeordnet werden.

15. Verfahren nach einem der Ansprüche 8 bis 14, **dadurch gekennzeichnet, dass** alle Messsignalkurven, Signale, Daten und Zustände eines Datensatzes zu einer Kollisions- bzw. Überlastsituation mit einer Bedienungseinrichtung (10) zur Bedienung und/oder Parametrierung des Überwachungssystems und/oder zur Visualisierung der Messsignale, angezeigt und/oder ausgedruckt werden.

## Claims

1. Monitoring system for the process-accompanying monitoring or detection of collision or overstress situations in machine tools (1), comprising
- a machine control (2),
- one or more sensors (4) for detecting measured signals and forming measured signal data records,
- a main memory (12) for storing the measured signal data records,
- a monitoring means (6) in which a comparison of the measured signals of at least one sensor with stored monitoring thresholds is performed, and
- the monitoring device (6) supplying machine stop or machine reaction instructions to the machine control (2) upon detection of collision or overstress situations,
**characterized in**
**that** the monitoring means (6) is configured such that, upon detection of a collision or overstress situation, it reads the measured signal data records of the sensors (4) as measured by the sensors (4) before, during and after a collision or overstress situation from the main memory (12) and retrieves the data and statuses of the machine control (2) from the machine control (2) and stores the retrieved data and statuses of the machine control (2) permanently in a event data recorder (14).

2. Monitoring system according to claim 1, **characterized in that** the system comprises
- one or more sensors (4) for detecting measured signal data records (measured signals or measured signal curves) as produced at collisions, overstresss or damage to machine tools (1), which are to be equated with at least one direction of force, a resultant force, a pressure, a torque, a motor output, a motor current, even if it is taken from the values of the motor current sensor of the control, a vibration, an acceleration, a distance variation or a structure-borne noise,
- a monitoring means (6) in which a comparison of the measured signal data records of at least one sensor (4) with stored monitoring thresholds, such as static thresholds, dynamic thresholds, thresholds of signal pattern curves is made with the aim to give a corresponding report from the monitoring system (6) to the machine control (2) in order to immediately stop the machine tool or at least its feed drives (3) in case of measured signal data records violating the monitoring thresholds, and
- a bidirectional interface (8) between the monitoring means (6) and the machine control (2), which effects a data exchange between the machine (1) and the monitoring system (6) and is adapted to activate the monitoring means (6) via a signal as soon as a feed slide moves or to transfer spindle-, tool- or cutting-specific monitoring sections in the form of data words from the NC or SPC program to the monitoring means (6) for the purpose of dividing the monitoring into different monitoring sections, and is also adapted to transmit machine stop or at least machine reaction instructions to the machine control (2) at the moment of detecting collisions or overstress situations.

3. The monitoring system according to claim 1 or 2, **characterized in that** data and statuses of the machine control (2) are detected immediately upon report of a collision or overstress situation to the machine control (2), are transferred to the monitoring means (6) via the interface (8) between the machine control (2) and the monitoring means (6) and are written into the event data recorder (14) thereof when a collision or overstress situation of the monitoring system is reported to the machine control (2).

4. The monitoring system according to one of claims 1 to 3, **characterized in that** the interface (8) between the machine control (2) and the monitoring means (6) preferably is a field bus interface such as, for example, a process data highway or an interbus.

5. The monitoring system according to one of claims 1 to 4, **characterized in that** the monitoring means (6) is connected to an operating means (10) for operating and/or parameterizing the monitoring system and/or for visualizing the measured signals.

6. The monitoring system according to one of claims 1 to 5, **characterized in that** the measured signal data records to be filed in the event data recorder (14) and having the lower resolution preferably start about 2 seconds before the collision or overstress situation and end about 3 seconds thereafter.

7. The monitoring system according to one of claims 1 to 6, **characterized in that** the measured signal data records to be filed in the event data recorder (14) and having the higher resolution preferably start about 100 milliseconds before the collision or overstress situation and end about 150 milliseconds thereafter.

8. Method for the process-accompanying monitoring or detection of collision or overstress situations in machine tools (1) by detecting measured signals and storing measured signal data records that allow to determine collision or overstress situations,
- by comparing the measured signals to stored monitoring thresholds, wherein, upon detecting a collision or overstress situation, machine stop or machine reaction instructions are supplied to a machine control (2),
**characterized in that**
the measured signals of the sensors (4) are logged continuously as measured signal data records, and
upon detection of a collision or overstress situation, the measured signal data records of the sensors (4) as measured by the sensors (4) before, during and after a collision or overstress situation are read and stored permanently together with data and statuses of the machine control (2) retrieved in the event of collision or overstress situations.

9. Method according to claim 8, **characterized in that** preferably two measured signal data records of each of the sensors (4) are stored into different working memory locations of the working memory (12) with a mutually different resolution in time.

10. Method according to claim 8 or 9, **characterized in that** the transfer of the measured signal data into the event data recorder (14) of the monitoring system is immediately effected at the detection of the collision or overstress situation and thus together with the report of this situation to the machine control (2).

11. Method according to one of claims 8 to 10, **characterized in that** at least one of the following data and statuses of the machine control (2) is written into the event data recorder (14) of the monitoring means (6) in case of a collision or overstress situation:
- program name or number that has been active in the NC control,
- record number where the NC program has been stopped by the monitoring system,
- present tool number,
- operational mode of the machine,
- programmed tool correction values from the tool correction memory,
- programmed zero point displacement,
- setting of the override switch for feed,
- setting of the override switch for spindle speed,
- speed of the spindles,
- programmed speed of the feed slides,
- present speed of the feed slides,
- programmed feed of the feed slides,
- position or actual position value of the feed slides,
- date and time.

12. Method according to one of claims 8 to 11, **characterized in that** immediately with the report of a collision or overstress situation from the monitoring means (6) to the machine control (2), all statuses of the signals of the bidirectional interface (8) between the monitoring means and the machine control (2) are also written into the event data recorder (14) by the monitoring means (6).

13. Method according to one of claims 8 to 12, **characterized in that** immediately with the report of a collision or overstress situation from the monitoring means (6) to the machine control (2), all monitoring-relevant data of the monitoring means (6), such as, for example, the position of the monitoring thresholds, the measuring ranges or gain degrees of the sensors (4), the characteristic values for filtering the measured signals, the monitoring mode such as teach-in or setting are also written into the event data recorder (14).

14. Method according to one of claims 8 to 13, **characterized in that** all measured signal curves, signals, data and statuses to be filed in the event data recorder (14) of the monitoring means (6) with respect to a detected collision or overstress situation belong to an unmistakable and marked data record.

15. Method according to one of claims 8 to 14, **characterized in that** all measured signal curves, signals, data and statuses of a data record concerning a collision or overstress situation can be displayed and, if necessary, printed out by the operating means (10) for operating and/or parameterizing the monitoring system and/or for visualizing the measured signals.

## Revendications

1. Système de surveillance pour surveiller et reconnaître en cours de processus des situations de collision et de surcharge dans des machines-outils (1), ledit système de surveillance comportant :
- une commande de machine (2),
- un ou plusieurs capteurs (4) destinés à détecter des signaux de mesure et à former des ensembles de données de signal de mesure,
- une mémoire de travail (12) destinée à mémoriser des ensembles de données de signal de mesure,
- un dispositif de surveillance (6) dans lequel est effectuée une comparaison entre des signaux de mesure provenant d'au moins un capteur avec des seuils de surveillance en mémoire,
- le dispositif de surveillance (6) transmettant des instructions d'arrêt de machine ou de réaction de machine à la commande de machine (2) lors de la reconnaissance de situation de collision ou de surcharge dans une machine-outil (1),
**caractérisé en ce que**
le dispositif de surveillance (6) est conformé de façon à lire dans la mémoire de travail (12), lors de la reconnaissance d'une situation de collision ou de surcharge, les ensembles de données de signaux de mesure des capteurs (4), comme ceux mesurés avant, pendant et après une situation de collision ou de surcharge par les capteurs (4) et à extraire de la commande de machines (2) les données et états de la commande de machine (2) ainsi qu'à mémoriser les ensembles de données de signaux de mesure, qui ont été lus, et les données et états de la commande de machine (2), qui ont été extraits, de façon permanente dans un enregistreur de données d'événements (14).

2. Système de surveillance selon la revendication 1, **caractérisé en ce que** le système comporte :
- un ou plusieurs capteurs (4) pour saisir les signaux de mesure et mémoriser des ensembles de données de signaux de mesure (signaux de mesure et courbes de signaux de mesure) comme ceux générés lors de collisions, de surcharges ou d'endommagements de machines-outils (1), lesquels signaux peuvent être représentatifs d'au moins une direction de force, une résultante de force, une pression, un couple de rotation, une puissance de moteur, un courant de moteur, même lorsque celui-ci est déduit des valeurs du capteur de courant de moteur de la commande, une vibration, une accélération, une variation de distance et un bruit de structure,
- un dispositif de surveillance (6) dans lequel est effectuée une comparaison entre les signaux de mesure provenant d'au moins un capteur (4) et des seuils de surveillance en mémoire, tels que des seuils statiques, des seuils dynamiques, des seuils de courbe de modèle de signal dans le but de délivrer, lorsque les signaux de mesure franchissent des seuils de surveillance, un signal d'information correspondant du dispositif de surveillance (6) à la commande de machine (2) afin d'arrêter immédiatement la machine-outil ou au moins ses dispositifs d'entraînement (3), et
- une interface bidirectionnelle (8) entre le dispositif de surveillance (6) et la commande de machine (2), laquelle interface assure un échange de données entre la machine (1) et le dispositif de surveillance (6) et est appropriée pour activer le dispositif de surveillance (6) par un signal dès qu'un chariot d'avancement se déplace, ou pour transmettre des portions de surveillance spécifiques de broche, d'outil ou de coupe sous la forme de mots de données du programme de commande numérique ou programmable au dispositif de surveillance (6) dans le but de diviser la surveillance en différentes portions de surveillance, et est également appropriée à envoyer à la commande de machine (2) des instructions d'arrêt de machine ou au moins des instructions de réaction de machine lors de la reconnaissance de situations de collision ou de surcharge.

3. Système de surveillance selon la revendication 1 ou 2, **caractérisé en ce que**, dès la communication d'une situation de collision ou de surcharge à la commande de machine (2), celle-ci saisit les données et états de la commande de machine (2) et les transmet au dispositif de surveillance (6) par l'interface (8) entre la commande de machine (2) et le dispositif de surveillance (6) et les écrit dans l'enregistreur de données d'événements (14) du dispositif de surveillance.

4. Système de surveillance selon revendication 1 à 3, **caractérisé en ce que** l'interface (8) entre la commande de machine (2) et le dispositif de surveillance (6) est de préférence une interface à bus de zone comme par exemple un Profibus ou un Interbus.

5. Système de surveillance selon l'une des revendications 1 à 4, **caractérisé en ce que** le dispositif de surveillance (6) est relié à un dispositif de conduite (10) pour l'exploitation et/ou le paramétrage du système de surveillance et/ou la visualisation des signaux de mesure.

6. Système de surveillance selon l'une des revendications 1 à 5, **caractérisé en ce que** les ensembles de données de signaux de mesure à mémoriser de façon permanente dans l'enregistreur de données d'événements (14) commencent avec la plus faible résolution avantageusement environ 2 secondes avant la situation de collision ou de surcharge et se terminent environ 3 secondes après.

7. Système de surveillance selon l'une des revendications 1 à 6, **caractérisé en ce que** les ensembles de données de signaux de mesure à mémoriser de façon permanente dans l'enregistreur de données d'événements (14) commencent avec la résolution plus élevée avantageusement environ 100 millisecondes avant la situation de collision ou de surcharge et se terminent environ 150 millisecondes après.

8. Procédé de surveillance ou de reconnaissance en cours de processus de situations de collision ou de surcharge dans des machines-outils (1),
- en saisissant des signaux de mesure et en mémorisant des ensembles de données de signaux de mesure qui permettent de reconnaître des situations de collision ou de surcharge,
- en comparant les signaux de mesure à des seuils de surveillance en mémoire, des instructions d'arrêt de machine ou de réaction de machine étant envoyées à une commande de machine (2) lors de la reconnaissance d'une situation de collision ou de surcharge,
**caractérisé en ce que** :
- les signaux de mesure des capteurs (4) sont mémorisés en continu sous la forme d'ensembles de données de signaux de mesure, et **en ce que** :
- seulement lors de la reconnaissance d'une collision ou d'une surcharge, les ensembles de données de signaux de mesure des capteurs (4), comme ils ont été mesurés avant, pendant et après une situation de collision ou de surcharge par les capteurs (4), sont lus et mémorisés de façon permanente conjointement avec des données et états de la commande de machine (2) qui ont été extraits lors de la reconnaissance d'une collision ou d'une surcharge.

9. Procédé selon la revendication 8, **caractérisé en ce que** de préférence deux ensembles de données de signaux de mesure provenant de chacun des capteurs (4) sont écrits conjointement en continu à différents emplacements de la mémoire de travail (12) avec des résolutions temporelles différentes.

10. Procédé selon la revendication 8 ou 9, **caractérisé en ce que** la transmission des ensembles de données de signaux de mesure dans un enregistreur de données d'événements (14) est effectuée dès la reconnaissance d'une situation de collision ou de surcharge et en même temps que l'annonce de cette situation à la commande de machine (2).

11. Procédé selon l'une des revendications 8 à 10, **caractérisé en ce qu'**au moins un parmi les données et états suivants de la commande de machine (2) est écrit dans l'enregistreur de données d'événements (14) du dispositif de surveillance (6) lors d'une situation de collision ou de surcharge :
- Nom ou numéro du programme qui était actif dans la commande numérique,
- numéro de séquence lors duquel le programme de commande numérique a été arrêté par le système de surveillance,
- numéro d'outil actuel,
- mode de fonctionnement de la machine,
- valeurs de correction d'outil programmées provenant de la mémoire de correction d'outil,
- décalage programmé du point zéro,
- réglage du commutateur d'asservissement de l'avance,
- réglage du commutateur d'asservissement du nombre de tours des broches,
- vitesse de rotation des broches,
- vitesse programmée des chariots d'avance,
- vitesse actuelle des chariots d'avance,
- avance programmée des chariots d'avance,
- position ou valeurs de position réelles des chariots d'avance,
- date et heure.

12. Procédé selon l'une des revendications 8 à 11, **caractérisé en ce que**, dès qu'une situation de collision ou de surcharge est communiquée à la commande de machine (2) par le dispositif de surveillance (6), tous les états des signaux de l'interface bidirectionnelle (8) entre le dispositif de surveillance et la commande de machine (2) sont également écrits par le dispositif de surveillance (6) dans l'enregistreur de données d'événements (14).

13. Procédé selon l'une des revendications 8 à 12, **caractérisé en ce que**, dès qu'une situation de collision ou de surcharge est communiquée à la commande de machine (2) par le dispositif de surveillance (6), toutes les données du dispositif de surveillance (6), qui sont importantes pour la surveillance comme par exemple la position des seuils de surveillance, les plages de mesure ou le niveau d'amplification des capteurs (4), les valeurs caractéristiques de filtrage des signaux de mesure, le mode de surveillance tel que Colloque ou Opération d'ajustage, sont écrites dans l'enregistreur de données d'événements (14).

14. Procédé selon l'une des revendications 8 à 13, **caractérisé en ce que** toutes les courbes de signal de mesure, tous les signaux, toutes les données et tous les états qui doivent être mémorisés dans l'enregistreur de données d'événements (14) du dispositif de surveillance (6) lorsqu'une situation de collision ou de surcharge est reconnue, sont associés à un ensemble de données caractéristique et indubitable.

15. Procédé selon l'une des revendications 8 à 14, **caractérisé en ce que** toutes les courbes de signal de mesure, tous les signaux, toutes les données et tous les états d'un ensemble de données pour une situation de collision ou de surcharge sont affichés ou imprimés au moyen d'un dispositif de conduite (10) pour l'exploitation et/ou le paramétrage du système de surveillance et/ou la visualisation des signaux de mesure.
